# EUROPÄISCHE PATENTANMELDUNG

(11) **EP 1 249 293 A1**
(43) Veröffentlichungstag der Anmeldung: **16.10.2002**
(21) Anmeldenummer: 01109250.9
(22) Anmeldetag: 14.04.2001
(51) Int. Cl.: B23D 51/12, B27B 3/34, B28D 1/06

(54) **Spannsystem für Gattersägen**

(71) Anmelder: MPS Systems GmbH, 22844 Norderstedt (DE)
(72) Erfinder: Heinrich Mummenhoff, 42855 Remscheid (DE)
(74) Vertreter: Patentanwälte Dr. Solf & Zapf

(57) **Zusammenfassung**

Die Erfindung betrifft ein Spannsystem für Gattersägen mit einem eine Vielzahl von geradlinigen Sägeblättern (4) in zueinander paralleler Anordnung aufnehmenden Spannrahmen (2) und mindestens einer hydraulischen Spanneinrichtung (6) mit die Sägeblätter (4) in Richtung ihrer Längsachsen in Zugrichtung mit einer Spannkraft (F) beaufschlagenden Spannzylindern (8), wobei die Spanneinrichtung (6) die Sägeblätter (4) jeweils über flexible, mit den zu spannenden Sägeblättern (4) verbundene und über Umlenkelemente (10) geführte Zugelemente (12) beaufschlagt.

## Beschreibung

Die vorliegende Erfindung betrifft ein Spannsystem für Gattersägen mit einem eine Vielzahl von geradlinigen Sägeblättern in zueinander paralleler Anordnung aufnehmenden Spannrahmen und mindestens einer hydraulischen Spanneinrichtung mit die Sägeblätter in Richtung ihrer Längsachsen in Zugrichtung mit einer Spannkraft beaufschlagenden Spannzylindern.

Ferner betrifft die Erfindung auch einzelne Komponenten eines solchen Systems, und zwar ein Sägeblatt, eine Spanneinrichtung und einen Spannrahmen, sowie auch ein Verfahren zum Einspannen von Sägeblättern in einen Spannrahmen für eine Gattersäge.

Eine solche Gattersägen-Spanneinrichtung ist beispielsweise in der DE-AS 1 169 641 beschrieben. Dabei sind direkt am Spannrahmen auf beiden Seiten hydraulische Spannelemente integriert angeordnet. Diese Ausführung ist nur für relativ grobe, dicke Schnitte geeignet, da der gegenseitige Sägenabstand von den abmessungsbedingt recht großen Abständen der Spannelemente bestimmt wird.

Die US-A-1 767 390 beschreibt eine Gattersäge, bei der Sägeblätter derart in einem Rahmen gehalten sind, dass sie sich zwischen zwei parallel beabstandeten Rahmenstegen zueinander parallel und zu den Rahmenstegen senkrecht erstrecken. Die Sägeblätter verlaufen jedoch beidendig über die Rahmenstege hinaus, und mit diesen Enden sind sie fächerartig gespreizt und mit Spanneinrichtungen verbunden. Hierdurch wird erreicht, dass die Sägeblätter in ihrem parallelen Bereich näher aneinander liegen können, als dies durch die Spanneinrichtungen eigentlich möglich wäre. Allerdings ergibt sich durch die fächerartige Spreizung der Sägeblätter eine immer größer werdende Umlenkung ausgehend von den mittleren in Richtung der äußeren Sägeblätter. Da die Sägeblätter aber eine bestimmte Stabilität für den Sägevorgang benötigen, ist die Umlenkung natürlich nur begrenzt im Rahmen der Biegeelastizität möglich. Dies führt dazu, dass nach diesem bekannten System nur eine noch relativ kleine Anzahl von Sägeblättern gespannt werden kann. Dabei ist zudem nachteilig, dass für die Bildung der beidseitigen Spreizfächer auch sehr viel Raum beidseitig der Rahmenstege des eigentlichen Spannrahmens benötigt wird.

Der vorliegenden Erfindung liegt die Aufgabe zugrunde, Möglichkeiten zu schaffen, um bei einer Gattersäge in großer Anzahl nahezu beliebig feine, dünne Schnitte mit hoher Schnittgenauigkeit durchführen zu können.

Erfindungsgemäß wird dies bei einem Spannsystem gemäß dem Anspruch 1 dadurch erreicht, daß die Spanneinrichtung die Sägeblätter jeweils über flexible, mit den zu spannenden Sägeblättern einendig verbundene und über Umlenkelemente geführte Zugelemente beaufschlagt. Dadurch kann die Spanneinrichtung beim Spannen der Sägeblätter so relativ zu deren Längsachsen seitlich versetzt angeordnet werden, daß der gegenseitige Sägenabstand völlig unabhängig von den Abständen der Spannzylinder ist. Da die Zugelemente insbesondere materialbedingt eine wesentlich höhere Flexibilität als die Sägeblätter selbst aufweisen, können Sie über die Umlenkelemente um einen nahezu beliebigen Winkel, insbesondere um etwa 90°, umgelenkt werden. Dadurch ist es vorteilhafterweise möglich, die Spanneinrichtung ― insbesondere als gesonderte, von dem Spannrahmen unabhängige Baugruppe ― in einem relativ zu den verlängerten Längsachsen der Sägeblätter seitlich versetzten Bereich anzuordnen. Dadurch ist es erfindungsgemäß möglich eine nahezu beliebig große Anzahl von Sägeblättern gleichzeitig zu spannen, wobei die Anzahl ausschließlich von der Größe des Spannrahmens, der Dicke der einzelnen Sägeblätter und von deren lichtem Abstand voneinander abhängt.

Ein erfindungsgemäßes Sägeblatt zeichnet sich somit dadurch aus, daß mit mindestens einem der beiden Enden seines Sägenkörpers ein flexibles Zugelement derart fest verbunden ist, daß über das Zugelement der Sägenkörper mit einer erforderlichen Spannkraft beaufschlagbar ist.

Die Spanneinrichtung ist erfindungsgemäß als eine von dem Sägen-Spannrahmen und von einer Sägemaschine unabhängige Baugruppe mit hydraulischen Spannzylindern und diesen jeweils zugeordneten Umlenkelementen für flexible, mit den einzelnen Sägeblättern verbundene Zugelemente ausgebildet. Der Spannrahmen besitzt erfindungsgemäß Fixiermittel zum beidendigen Halten der Sägeblätter in einem zuvor über die separate Spanneinrichtung gespannten Zustand. Damit ist erfindungsgemäß eine Vormontage des Sägerahmens unabhängig von der Sägemaschine möglich, indem der Rahmen mit einer Bestückung aus gespannten und beidendig fixierten Sägeblättern versehen wird.
- Nach dem erfindungsgemäßen Verfahren werden damit die Sägeblätter zunächst unabhängig von der Sägemaschine vormontiert und dazu einendig am Spannrahmen befestigt, dann anderendig durch Beaufschlagung mit einer Zugkraft mittels der separaten Spanneinrichtung gespannt und in diesem gespannten Zustand fixiert, wonach schließlich die Spanneinrichtung von den Sägeblättern und dem mit diesen bestückten Spannrahmen abgekoppelt wird. Es entsteht so ein mit gespannten Sägeblättern bestückter Spannrahmen, der dann nur noch auf die jeweilige Sägemaschine montiert zu werden braucht.

Mit der Erfindung werden insbesondere die folgenden Vorteile erreicht:
- nahezu beliebig feine Schnitte möglich durch sehr geringe Sägen-Abstände,
- hohe Schnittgenauigkeit durch optimale Sägenspannung,
- hohe Wirtschaftlichkeit; Vormontage der Sägeblätter kann unabhängig von der Sägemaschne erfolgen; Reduzierung von Stillstands- und Umrüstzeiten der Sägemaschine; Vereinfachung der Spannrahmen aufgrund der davon gesonderten Spanneinrichtung; die gleiche Spanneinrichtung kann nacheinander wiederholt zum Bestücken von verschiedenen Spannrahmen verwendet werden.

Die Erfindung eignet sich insbesondere zum Bearbeiten von mineralischen Materialien, wie z.B. Stein, Granit, Glas, Silicium und dergleichen. Dabei werden heute vielfach sehr dünne Plattenschnitte gefordert. Durch die Erfindung kann dieser Forderung Rechnung getragen werden, da Schnittdicken im Millimeterbereich oder sogar im 1/10 Millimeterbereich realisiert werden können. Dazu sind die Sägeblätter selbst außerordentlich dünn (bis zu 1/10 mm), wobei sie mit einem Diamant-Schneidbelag mit einer Dicke von etwa 2/10 mm ausgestattet sind. Hierdurch wird der weitere Vorteil erreicht, daß ein nur sehr geringer Materialverlust (Verschnitt) durch die Schnittspaltbildung beim Sägevorgang auftritt.

Weitere vorteilhafte Ausgestaltungsmerkmale der Erfindung sind in abhänigigen Ansprüchen enthalten.

Anhand der Zeichnung soll die Erfindung beispielhaft genauer erläutert werden. Dabei zeigen:
- Fig. 1: eine stark schematische Ansicht auf die wesentlichen Komponenten eines erfindungsgemäßen Spannsystems und
- Fig. 2: eine vergrößerte Schnittansicht in der Ebene II-II gemäß Fig. 1

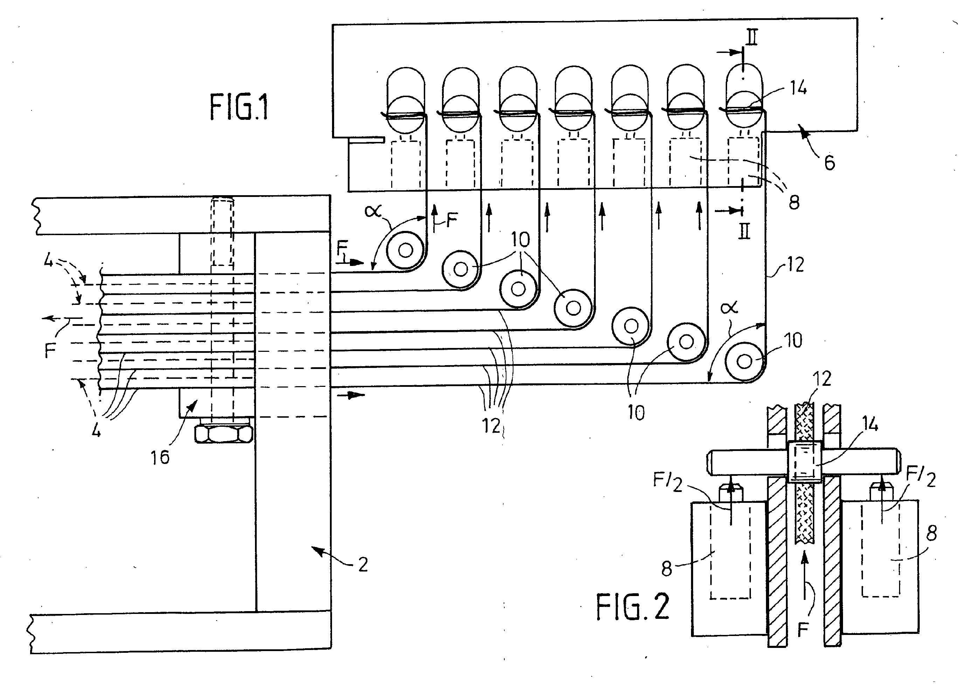

In Fig. 1 ist von einem Spannrahmen 2 nur einer von zwei gegenüberliegenden Endbereichen dargestellt. Der Spannrahmen 2 ist dazu vorgesehen, eine Vielzahl von geradlinigen Sägeblättern 4 in zueinander paralleler Anordnung und in gespanntem Zustand aufzunehmen. Zum Spannen der Sägeblätter 4 ist eine hydraulische Spanneinrichtung 6 vorgesehen, wobei jedes Sägeblatt in Richtung seiner Längsachse in Zugrichtung mit einer Spannkraft F in der Größenordnung von etwa 800 bis 1000 kg über jeweils mindestens einen, im dargestellten Ausführungsbeispiel über jeweils zwei Spannzylinder 8 beaufschlagt wird.

Alle Spannzylinder 8 sind derart hydraulisch miteinander verbunden, daß der hydraulische Druck in allen Zylindern gleich groß ist, so daß über die gleich großen Kolbenflächen auch die Spannkraft F für jedes Sägeblatt genau gleich groß ist.

Vorzugsweise wird auf jeder Seite des Spannrahmens 2 nur jedes zweite Sägeblatt 4 über die Spanneinrichtung 6 beaufschlagt, während die jeweils dazwischenliegenden Sägeblätter 4 (in Fig. 1 gestrichelt eingezeichnet) auf dieser Seite des Spannrahmens 2 fest eingespannt und statt dessen auf der gegenüberliegenden Seite des Spannrahmens über eine nicht dargestellte zweite Spanneinrichtung beaufschlagt werden.

Erfindungsgemäß beaufschlagt die Spanneinrichtung 6 die Sägeblätter 4 jeweils über flexible, mit den zu spannenden Sägeblättern verbundene und über Umlenkelemente 10 geführte Zugelemente 12. Gemäß Fig. 2 ist dazu jedes Zugelement 12 an einem jochartigen Verbindungselement 14 befestigt, welches von den Spannzylindern 8 mit der Spannkraft F beaufschlagt wird.

Die Spanneinrichtung 6 ist insbesonders als gesonderte, von dem Spannrahmen 2 unabhängige Baugruppe in einem relativ zu den verlängerten Längsachsen der Sägeblätter 4 seitlich versetzten Bereich anzuordnen, wobei die Zugelemente 12 über die Umlenkelemente 10 jeweils um einen Winkel α von insbesondere etwa 90° umgelenkt werden.

Die Sägeblätter 4 sind durch mindestens eine mit dem Spannrahmen 2 verbundene Fixiereinrichtung 16 in ihrem gespannten Zustand fixierbar, so daß nach dem Fixieren die Spanneinrichtung 6 insbesondere durch Abtrennen der Zugelemente 12 von den Sägeblättern 4 abkoppelbar ist. Die Fixiereinrichtung 16 ist insbesondere als Klemmeinrichtung derart ausgebildet, daß die Enden der Sägeblätter durch Reibpressung relativ zum Spannrahmen 2 zusammengehalten werden.

Das jeweilige Zugelement 12 ist an einem Ende des jeweils zugehörigen Sägeblattes 4 insbesondere stoffschlüssig befestigt, und zwar vorzugsweise in einem derart flach auf der Seitenfläche des Sägeblattes liegenden Anordnung, daß ein möglichst geringer seitlicher Überstand erreicht wird. Dazu ist das Zugelement 12 vorzugsweise bandförmig oder aber drahtartig ausgebildet. Bei dem Zugelement 12 kann es sich beispielsweise um ein GFK-Band mit Kohlefasern, Glasfasern und/oder Aramid handeln.

Erfindungsgemäß werden somit die Sägeblätter 4 zunächst auf der in Fig. 1 nicht dargestellten Seite am Spannrahmen 2 befestigt, dann anderendig durch Beaufschlagung mit der Zugkraft F mittels der separaten Spanneinrichtung 6 gespannt und in diesem gespannten Zustand mittels der Fixiereinrichtung 16 fixiert. Schließlich kann die Spanneinrichtung 6 von den Sägeblättern 4 und dem mit diesen bestückten Spannrahmen 2 abgekoppelt werden, indem die Zugelemente 12 lediglich abgeschnitten zu werden brauchen. Bei den Zugelementen 12 kann sich mit Vorteil um ein Endlosmaterial handeln, so daß nach dem Abtrennen die einzelnen Zugelemente 12 an anderen Sägeblättern befestigt und für einen nächsten Spannvorgang verwendet werden können.

Abschließend sollen noch Einzelheiten der Erfindung wie folgt erläutert werden.

Die Sägeblätter 4 sind mit einem Diamant-Schneidbelag ausgestattet. Dazu werden Diamanten in Kokillen eingelegt und auf dem Sägenkörper mittels Laser aufgeschmolzen. Dies läßt geringe Belagdicken im Bereich von nur etwa 2/10 mm zu. Der Spannrahmen 2 kann zur Aufnahme von beispielsweise etwa 100 Sägeblättern nebeneinander ausgelegt sein. Da der Spannrahmen 2 nach dem Spannvorgang und dem Abtrennen der Spanneinrichtung 6 bzw. der Zugelemente 12 die gesamte Spannkraft (Anzahl der Sägeblätter x Einzel-Spannkraft F) aufnehmen muß, ist er entsprechend steif ausgebildet, um eine sehr geringe Durchbiegung zu gewährleisten. Um dennoch ein geringes Gewicht zu erreichen, besteht der Spannrahmen 2 vorzugsweise aus einer geeigneten Aluminiumlegierung.

Die Spanneinrichtung 6 könnte grundsätzlich auch ― in einer der Fig. 1 entsprechenden Anordnung ― mit dem Spannrahmen 2 verbunden bleiben, d. h. gemeinsam mit dem Spannrahmen in einer Sägemaschine eingesetzt werden.

Vor allem bei kleineren Spannrahmen 2 können diese von der Sägemaschine räumlich entfernt mittels der Spanneinrichtung 6 mit den Sägeblättern bestückt werden. Die bestückten Spannrahmen 2 können dann unabhängig von der Spanneinrichtung 6 ― gegebenenfalls nach einem Transport zu der jeweiligen Sägemaschine ― eingesetzt werden. Bei größeren Spannrahmen 2 sollte wenigstens eine Spanneinrichtung 6 in Maschinennähe plaziert sein.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Spannsystem für Gattersägen mit einem eine Vielzahl von geradlinigen Sägeblättern (4) in zueinander paralleler Anordnung aufnehmenden Spannrahmen (2) und mindestens einer hydraulischen Spanneinrichtung (6) mit die Sägeblätter (4) in Richtung ihrer Längsachsen in Zugrichtung mit einer Spannkraft (F) beaufschlagenden Spannzylindern (8),
**dadurch gekennzeichnet,**
**daß** die Spanneinrichtung (6) die Sägeblätter (4) jeweils über flexible, mit den zu spannenden Sägeblättern (4) verbundene und über Umlenkelemente (10) geführte Zugelemente (12) beaufschlagt.

2. Spannsystem nach Anspruch 1,
**dadurch gekennzeichnet,**
**daß** die Spanneinrichtung (6) ― insbesondere als gesonderte, von dem Spannrahmen (2) unabhängige Baugruppe ― in einem relativ zu den verlängerten Längsachsen der Sägeblätter (4) seitlich versetzten Bereich angeordnet ist, wobei die Zugelemente (12) über die Umlenkelemente (10) jeweils um einen Winkel (α) von insbesondere etwa 90° umgelenkt werden.

3. Spannsystem nach Anspruch 1 oder 2,
**dadurch gekennzeichnet,**
**daß** auf jeder Seite des Spannrahmens (2) nur jedes zweite Sägeblatt (4) über die Spanneinrichtung (6) beaufschlagt wird, während die jeweils dazwischenliegenden Sägeblätter (4) auf dieser Seite des Spannrahmens (2) fest eingespannt und auf der gegenüberliegenden Seite des Spannrahmens (2) über eine zweite Spanneinrichtung (6) beaufschlagt werden.

4. Spannsystem nach einem der Ansprüche 1 bis 3,
**dadurch gekennzeichnet,**
**daß** die Sägeblätter (4) durch mindestens eine mit dem Spannrahmen (2) verbundene Fixiereinrichtung (16) in ihrem gespannten Zustand fixierbar sind, wobei nach dem Fixieren die Spanneinrichtung (6) insbesondere durch Abtrennen der Zugelemente (12) von den Sägeblättern (4) abkoppelbar ist.

5. Sägeblatt (4), insbesondere zur Anwendung bei einem Spannsystem nach einem der vorhergehenden Ansprüche, bestehend aus einem länglichen Sägenkörper mit zwei einzuspannenden Enden,
**dadurch gekennzeichnet,**
**daß** mit mindestens einem der beiden Enden des Sägenkörpers ein flexibles Zugelement (12) fest verbunden ist.

6. Spanneinrichtung (6), insbesondere zur Anwendung bei einem Spannsystem nach einem der Ansprüche 1 bis 4,
**gekennzeichnet durch** eine von einem Sägen-Spannrahmen (2) unabhängige Baugruppe mit hydraulischen Spannzylindern (8) und diesen jeweils zugeordneten Umlenkelementen (10) für flexible Zugelemente (12).

7. Spannrahmen (2) für Gattersägen zur Aufnahme einer Vielzahl von geradlinigen Sägeblättern (4) in zueinander paralleler Anordnung,
**gekennzeichnet durch** Fixiermittel (16) zum beidendigen Halten der Sägeblätter (4) in einem ― zuvor über mindestens eine separate Spanneinrichtung (6) ― gespannten Zustand.

8. Spannrahmen (2) nach Anspruch 7 mit einer Bestückung aus gespannten und beidendig fixierten Sägeblättern (4).

9. Verfahren zum Einspannen von geradlinigen Sägeblättern (4) in einem Spannrahmen (2) für eine Gattersäge,
**dadurch gekennzeichnet,**
**daß** die Sägeblätter (4) zunächst einendig am Spannrahmen (2) befestigt, dann anderendig durch Beaufschlagung mit einer Zugkraft (F) mittels einer Spanneinrichtung (6) gespannt und in diesem gespannten Zustand fixiert werden, und daß schließlich die Spanneinrichtung (6) von den Sägeblättern (4) abgekoppelt wird.
